# NEUE EUROPÄISCHE PATENTSCHRIFT

(11) **EP 2 871 088 B2**
(45) Veröffentlichungstag und Bekanntmachung des Hinweises auf die Entscheidung über den Einspruch: **13.11.2019**
(45) Hinweis auf die Patenterteilung: 29.06.2016
(21) Anmeldenummer: 14192133.8
(22) Anmeldetag: 06.11.2014
(51) Int. Cl.: B60K 15/035

(54) **Entlüftungsventil**
Vent valve
Ventilateur

(30) Priorität: 12.11.2013 DE 102013112407
(43) Veröffentlichungstag der Anmeldung: 13.05.2015
(73) Patentinhaber: VERITAS AG, 63571 Gelnhausen (DE)
(72) Erfinder: STEHLE, Alexander, 55116 Mainz (DE); Schindler, Thomas, 63768 Hösbach (DE)
(74) Vertreter: Patentship Patentanwaltsgesellschaft mbH

(56) Entgegenhaltungen:
- EP-A1- 0 737 784
- EP-A1- 1 203 685
- EP-A1- 2 759 436
- EP-A2- 1 184 221
- EP-A2- 1 236 605
- DE-A1- 19 707 841
- DE-A1-102004 023 477
- DE-T2-602004 009 648
- US-A- 3 321 972
- US-A- 5 529 086
- US-A- 5 582 198
- US-A1- 2004 144 444
- US-A1- 2004 221 890
- US-A1- 2006 108 000
- US-A1- 2011 139 301
- US-B1- 6 508 263
- US-B2- 7 571 740

## Beschreibung

Die vorliegende Erfindung betrifft ein Entlüftungsventil zum Entlüften eines Flüssigkeitstanks in einem Kraftfahrzeug.

Beim Betanken eines Flüssigkeitstanks wird die Luft im Inneren des Flüssigkeitstanks durch die eingefüllte Flüssigkeit verdrängt. Um die verdrängte Luft aus dem Flüssigkeitstank abzuführen, werden spezielle Entlüftungsventile verwendet. Derartige Entlüftungsventile können sperrig sein und relativ viel Bauraum in Anspruch nehmen.

Die Druckschrift EP 2 008 857 A1 beschreibt beispielsweise einen Kraftstofftank für ein Kraftfahrzeug mit einem ein Ventilgehäuse und eine Entlüftungsöffnung aufweisenden Entlüftungsventil, das in einer oberen Öffnung des Tanks eingesetzt ist und in das Tankinnere hineinragt und bei dem die Wand des Ventilgehäuses von einer Wandöffnung durchsetzt ist. Im Ventilgehäuse befindet sich ein zwischen einer Ruhestellung und einer Schließstellung beweglicher Schwimmer.

Die gattungsgemäße Druckschrift EP 1 203 685 A1 beschreibt einen Kraftstofftank mit einem Verbindungselement, welches ausgebildet ist, das Austreten von Verdampfungsemissionen aus einem Kraftstofftank zu vermindern. Das Verbindungselement umfasst ein Kraftstoffabsperrventil mit einem Schwimmer.

Die Druckschrift DE 197 07 841 A1 beschreibt ein Entlüftungsventil für Kraftstoffbehälter von Kraftfahrzeugen. Das Entlüftungsventil umfasst ein Gehäuse und ein in dem Gehäuse angeordneten Schwimmer.

Die Druckschrift US 6,508,263 B1 beschreibt ein durch einen Schwimmer zu betätigendes Entlüftungsventil für Kraftstoffdampf in einem Tank. Das Entlüftungsventil weist einen sich nach unten erstreckenden Abschnitt auf, in dem eine Schwimmeinrichtung angeordnet ist.

Es ist die der Erfindung zugrundeliegende Aufgabe, ein Entlüftungsventil anzugeben, bei dem ein Verkanten eines Schwimmers verhindert wird und das mit einem geringen Bauraum realisiert werden kann.

Diese Aufgabe wird durch den Gegenstand mit den Merkmalen nach dem unabhängigen Anspruch gelöst. Vorteilhafte Ausführungsformen sind Gegenstand der abhängigen Ansprüche, der Beschreibung und der Figuren.

Die Aufgabe wird durch ein Entlüftungsventil mit einer Entlüftungsöffnung zum Entlüften eines Flüssigkeitstanks in einem Kraftfahrzeug gelöst, mit einem Schwimmer in einer Schwimmerkammer zum Verschließen der Entlüftungsöffnung; und Führungsrippen zum Führen des Schwimmers in der Schwimmerkammer, die durch ein Gehäuse der Schwimmerkammer gebildet sind und in das Innere der Schwimmerkammer ragen. Dadurch wird beispielsweise der technische Vorteil erreicht, dass ein kompakt aufgebautes Entlüftungsventil realisiert wird und der für das Entlüftungsventil benötigte Bauraum verringert werden kann. Die Führung des Schwimmers findet mit einem geringen Spiel und mit einem geringen Reibungswiderstand statt, so dass ein schnelles Ansprechverhalten des Entlüftungsventil erreicht wird.

Ferner umfasst der Schwimmer des Entlüftungsventils einen becherförmigen Schwimmerkörper. Dadurch wird beispielsweise der technische Vorteil erreicht, dass der Schwimmer mit einem geringen Materialaufwand gebildet wird.

Erfindungsgemäß liegen die Führungsrippen an einer Innenseite des becherförmigen Schwimmerkörpers an. Dadurch wird beispielsweise der technische Vorteil erreicht, dass der Bauraum des Entlüftungsventils weiter reduziert wird.

In einer vorteilhaften Ausführungsform des Entlüftungsventils umfasst der Schwimmer einen umlaufenden Randabschnitt zum Abstützen des Schwimmers auf den Führungsrippen. Dadurch wird beispielsweise der technische Vorteil erreicht, dass der Schwimmer nicht nur durch die Führungsrippen geführt sondern ebenfalls in einer bestimmten Position gehalten wird.

In einer weiteren vorteilhaften Ausführungsform des Entlüftungsventils umfassen die Führungsrippen jeweils eine Noppe zum Verringern einer Auflagefläche des Schwimmers auf den Führungsrippen. Dadurch wird beispielsweise der technische Vorteil erreicht, dass sich die Leichtgängigkeit des Schwimmers verbessert und eine Blockierung des Schwimmers vermieden wird.

In einer weiteren vorteilhaften Ausführungsform des Entlüftungsventils ist die Noppe aus einem elastischen Material gebildet. Dadurch wird beispielsweise der technische Vorteil erreicht, dass sich Bewegungsgeräusche des Schwimmers verringern.

In einer weiteren vorteilhaften Ausführungsform des Entlüftungsventils sind die Führungsrippen durch senkrecht in die Schwimmerkammer ragende Wände gebildet. Dadurch wird beispielsweise der technische Vorteil erreicht, dass nicht nur der Schwimmer durch die Führungsrippen geführt wird, sondern sich ebenfalls eine Stabilität des Gehäuses verbessert.

In einer weiteren vorteilhaften Ausführungsform des Entlüftungsventils sind die Führungsrippen keilförmig mit einer Entformschräge ausgebildet. Dadurch wird beispielsweise der technische Vorteil erreicht, dass das Gehäuse auf einfache Weise mittels eines Spritzgusswerkzeuges hergestellt werden kann.

In einer weiteren vorteilhaften Ausführungsform des Entlüftungsventils erstrecken sich die Führungsrippen von einer Bodenseite der Schwimmerkammer aus. Dadurch wird beispielsweise der technische Vorteil erreicht, dass der Schwimmer auf einer Innenfläche geführt werden kann.

In einer weiteren vorteilhaften Ausführungsform des Entlüftungsventils weisen die Führungsrippen an einer Führungskante eine Spitze oder Abrundung zum Verringern einer Kontaktfläche auf. Dadurch wird beispielsweise der technische Vorteil erreicht, dass die Leichtgängigkeit des Schwimmers erhöht wird und Adhäsionskräfte verringert werden, die durch anhaftende Flüssigkeit entstehen können.

In einer weiteren vorteilhaften Ausführungsform des Entlüftungsventils verlaufen die Führungsrippen entlang einer Strömungsrichtung beim Füllen der Schwimmerkammer. Dadurch wird beispielsweise der technische Vorteil erreicht, dass der Schwimmer schnell auf einen steigenden Flüssigkeitspegel reagieren kann.

In einer weiteren vorteilhaften Ausführungsform des Entlüftungsventils ist zwischen den Führungsrippen eine Strömungsplatte Durchflussöffnung zum Brechen eines in die Schwimmerkammer eintretenden Flüssigkeitsstrahles angeordnet. Dadurch wird beispielsweise der technische Vorteil erreicht, dass der Schwimmer nicht durch einen Impuls eines eintretenden Flüssigkeitsstroms betätigt wird.

In einer weiteren vorteilhaften Ausführungsform des Entlüftungsventils ist in den Führungsrippen eine Aufsetzkante zum Aufsetzen des Schwimmers gebildet. Dadurch wird beispielsweise der technische Vorteil erreicht, dass der Schwimmer in einer geöffneten Position zusätzlich stabilisiert wird.

In einer weiteren vorteilhaften Ausführungsform des Entlüftungsventils sind die Führungsrippen einstückig mit dem Gehäuse ausgebildet. Dadurch wird beispielsweise der technische Vorteil erreicht, dass die Stabilität des Gehäuses verbessert wird und sich die Führungsrippen in einem Arbeitsgang zusammen mit dem Gehäuse herstellen lassen. Ausführungsbeispiele der Erfindung sind in den Zeichnungen dargestellt und werden im Folgenden näher beschrieben.

Es zeigen:
- Fig. 1: eine perspektivische Ansicht und eine Explosionsansicht eines nicht erfindungsgemäßen Entlüftungsventils;
- Fig. 2A bis 2D: mehrere Querschnittsansichten eines nicht erfindungsgemäßen Entlüftungsventils;
- Fig. 3: eine perspektivische Ansicht und eine Explosionsansicht eines Entlüftungsventils;
- Fig. 4A bis 4D: mehrere Querschnittsansichten des Entlüftungsventils; und
- Fig. 5A bis 5C: mehrere Untersichten auf unterschiedliche nicht erfindungsgemäße Entlüftungsventile.

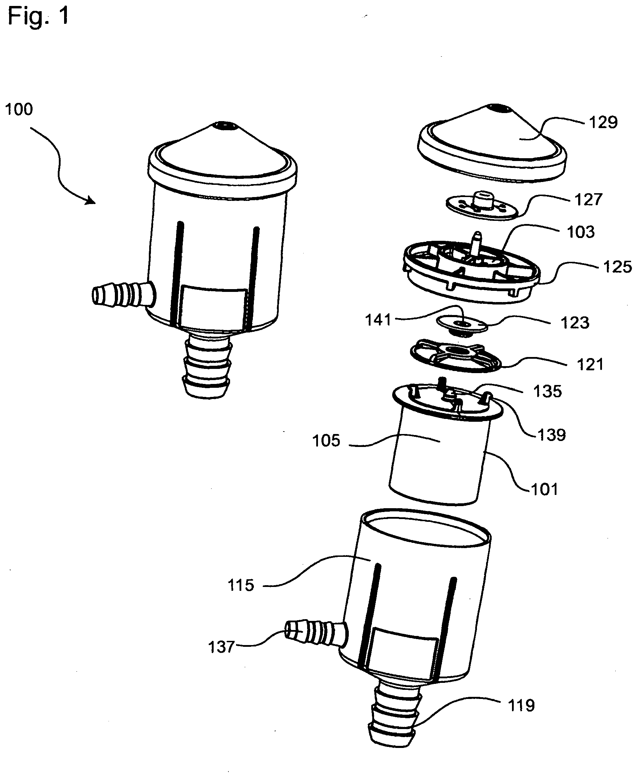

Fig. 1 zeigt eine perspektivische Ansicht und eine Explosionsansicht des Entlüftungsventils 100. Das Entlüftungsventil 100 wird in der Tankentlüftungsleitung eingesetzt. Das Entlüftungsventil 100 ermöglicht, dass bei Überdruck, beispielsweise entstehend durch Betankung oder Luftdruckunterschiede, das zu verdrängende Gasvolumen definiert aus dem Flüssigkeitstank entweicht. Darüber hinaus wird durch das Entlüftungsventil 100 eine Abschaltung/Beendigung einer Zapfventilautomatik bei einer definierten Füllmenge bewirkt.

Beim Betanken eines Flüssigkeitstanks wird die Luft im Flüssigkeitstank durch die eingefüllte Flüssigkeit verdrängt. Wird der Flüssigkeitstank mit einer hohen Befüllrate, von beispielsweise 40l/min befüllt, strömt die verdrängte Luft im Wesentlichen mit der gleichen Rate aus dem Flüssigkeitstank. Um die jeweilige Befüllrate zu ermöglichen, sollte das Entlüftungsventil 100 für die verwendete Befüllrate ausgelegt sein.

Das Entlüftungsventil 100 umfasst ein becherförmiges Gehäuse 115, in dem ein Stutzen als Leitungsanschluss 119 zum Zuführen von Flüssigkeit aus dem Flüssigkeitstank zu dem Entlüftungsventil und ein Nebenstutzen 137 für einen weiteren Luftaustausch gebildet sind, beispielsweise bei einer Betankung des Flüssigkeitstanks mit einer aufgeschraubten Flasche. Beim regulären Betanken des Flüssigkeitstanks tritt Flüssigkeit über eine am Leitungsanschluss 119 angeschlossene Flüssigkeitsleitung in das Entlüftungsventil 100 ein. Das Gehäuse 115 bildet in Inneren eine zylindrische Schwimmerkammer 107. Durch den Leitungsanschluss 119 wird der Vorteil erreicht, dass das Entlüftungsventil 100 außerhalb des Flüssigkeitstanks verwendet werden kann. Eine Beschädigung oder eine Funktionsbeeinträchtigung des Entlüftungsventils 100 durch sich im Flüssigkeitstank bewegende Flüssigkeit kann dadurch verhindert werden.

Im Inneren des Entlüftungsventils 100 befindet sich ein Schwimmer 101 mit einem Schwimmerkörper 105, der beim Eintritt der Flüssigkeit in das Entlüftungsventil 100 eine Entlüftungsöffnung 103 schließt. Hierdurch wird ein erstes Ventil im Inneren des Entlüftungsventils 100 realisiert.

Der Schwimmerkörper 105 ist ebenfalls becherförmig ausgebildet und befindet sich im inneren des Entlüftungsventils 100. Durch die nach unten hin geöffnete Becherform bildet sich im Inneren des Schwimmerkörpers 105 beim Eintritt von Flüssigkeit ein Lufteinschluss, der den Schwimmerkörper 105 nach oben aufschwimmen lässt und gegen die Entlüftungsöffnung 103 drückt. In diesem Fall tritt keine Luft mehr über die Entlüftungsöffnung 103 aus dem Entlüftungsventil 100 aus.

Sinkt der Flüssigkeitspegel im Inneren des Entlüftungsventils 100 ab, bewegt sich der Schwimmer 101 erneut nach unten und gibt die Entlüftungsöffnung 103 frei. In diesem Fall kann die Luft wieder über die Entlüftungsöffnung 103 aus dem Entlüftungsventil 100 austreten. Beim Betanken tritt die von der Flüssigkeit im Inneren des Tanks verdrängte Luft solange aus, bis Flüssigkeit in die Flüssigkeitsleitung eintritt, die zu dem Entlüftungsventil 100 führt und den Schwimmer 101 in die Schließstellung bringt.

An der Oberseite des Schwimmers 101 ist eine Schwimmerdichtung 123 zum Abdichten der Entlüftungsöffnung 103 angeordnet. Die Schwimmerdichtung 123 ist tellerförmig ausgebildet und besteht aus einem elastischen Material, wie beispielsweise Silikon. Die Schwimmerdichtung 123 legt sich in der Schließstellung auf die gegenüberliegende Randfläche der Entlüftungsöffnung 103 und verschließt die Entlüftungsöffnung 103 derart, dass keine Luft aus dem Entlüftungsventil 100 entweichen kann.

Die Schwimmerdichtung 123 ist an dem Schwimmerkörper 105 über einen Dichtungsträger 121 befestigt. Der Dichtungsträger 121 weist eine mittige, runde Einsatzöffnung auf, in die die Schwimmerdichtung 123 eingesetzt wird. Zu diesem Zweck weist die tellerförmige Schwimmerdichtung 123 eine wulstförmige Auswölbung auf, die in die Einsatzöffnung eingedrückt wird. Zur Befestigung des Dichtungsträgers 121 sind an der Oberseite des Schwimmerkörpers 105 vier Befestigungsarme 139 gebildet, die in den Dichtungsträger 121 eingreifen. Dabei sind die Befestigungsarme 139 derart ausgebildet, dass der Dichtungsträger 121 gegenüber dem Schwimmerkörper 105 ein gewisses Spiel aufweist und sich innerhalb des Spiels frei bewegen kann.

Das Spiel bewirkt einen sich in Längsrichtung erstreckenden Bewegungsfreiraum des Dichtungsträgers 121 mit der Schwimmerdichtung 123. In der Mitte der Schwimmerdichtung 123 ist eine Dichtungsöffnung 141 zum Durchlassen von Luft aus oder in die Schwimmerkammer 107 gebildet. Gegenüber der Dichtungsöffnung 141 ist auf der Oberseite des Schwimmerkörpers 105 ein Dorn 135 gebildet. In der Schließstellung wird der Dorn 135 auf die Dichtungsöffnung 141 gedrückt, so dass ein Luftaustritt verhindert wird.

Sinkt der Flüssigkeitspegel in der Schwimmerkammer 107 ab, so sinkt der Schwimmerkörper 105 aufgrund seines Eigengewichtes ebenfalls nach unten sofern kein definierter Überdruck im Schwimmergehäuse ansteht. Dabei wird aufgrund des Spiels des Dichtungsträgers 121 zunächst der Dorn 135 von der Dichtungsöffnung 141 weg bewegt, so dass die Dichtungsöffnung 141 frei gegeben wird und Luft durch die Dichtungsöffnung 141 hindurchtreten kann. Dadurch kann ein Überdruck in der Schwimmerkammer 107 abgebaut werden, der eventuell verhindern würde, dass sich das Entlüftungsventil 100 wieder öffnet.

Danach wird beim weiteren Absinken des Schwimmerkörpers 105 die Schwimmerdichtung 123 zusammen mit dem Dichtungsträger 121 nach unten bewegt, so dass die Entlüftungsöffnung 103 wieder vollständig freigegeben wird. Durch diese Ausgestaltung lässt sich ein Verbleiben des Schwimmers 101 in der Schließstellung verhindern.

Der zylindrische Schwimmerkörper 105 des Schwimmers 101 ist im Inneren der Schwimmerkammer 107 mithilfe mehrerer Führungsrippen beweglich geführt, die durch ein Gehäuse 115 der Schwimmerkammer 107 gebildet sind und in das Innere der Schwimmerkammer 107 ragen. Die Führungsrippen unterstützen die Bewegung des Schwimmerkörpers 105.

Die Entlüftungsöffnung 103 ist in einer kreisförmigen Dichtungsplatte 125 gebildet. Die Dichtungsplatte 125 wird von oben auf das Gehäuse 115 gesetzt und verschweißt, so dass die Schwimmerkammer 107 verschlossen wird. Die Schwimmerkammer 107 ist dadurch gegenüber Atmosphärendruck abgeschlossen.

Zur Erhöhung der Stabilität der Dichtungsplatte 125 weist diese eine Anzahl von Verstärkungsstreben auf. Die Verstärkungsstreben erstrecken sich auf der Außenseite der Dichtungsplatte 125 und verlaufen radial zwischen der Entlüftungsöffnung 103 und einem äußeren Rand der Dichtungsplatte 125.

Die Außenseite der Entlüftungsöffnung 103 wird von einer elastischen Membran 127 abgedeckt. Über die elastische Membran 127 kann die Luft bei einem Überdruck aus dem Entlüftungsventil 100 austreten. Dabei wird der Teller- oder Außenrand der elastischen Membran 127 nach oben gehoben, so dass die austretende Luft durch den Spalt zwischen der Membran 127 und der Dichtungsplatte 125 entweicht. Ist kein Überdruck im Ventilinneren vorhanden, liegt der Außenrand der Membran 127 auf der Dichtungsplatte 125 auf. Dadurch wird das Ventilinnere gegenüber der Außenumgebung abgeschlossen, so dass kein permanenter Luftaustausch mit der Umgebungsluft stattfindet. Hierdurch wird ein zweites Ventil im Inneren des Entlüftungsventils 100 realisiert.

Bei einem Unterdruck ermöglicht die verschließende Membran 127 durch zusätzlich integrierte Luftschlitze eine Öffnung zum Ventilinneren hin. In diesem Fall strömt die Umgebungsluft über die Luftschlitze durch die auf der Dichtungsplatte 125 aufliegende Membran 127 ins Ventilinnere. Die Luftschlitze in der elastischen Membran 127 sind derart gestaltet, dass diese bei ausgeglichenem Druck zwischen dem Ventilinneren und der Umgebung geschlossen sind. Hierdurch wird ein Luftaustausch mit dem Ventilinneren auf ein Minimum reduziert, so dass eine Austrocknung und eine damit verbundene Kristallisation von Harnstoff verhindert werden.

Der Aufbau des Entlüftungsventils 100 ist somit derart gestaltet, dass eine Luftzufuhr über Schlitze in der Membran 127 ebenfalls für einen Unterdruck im Flüssigkeitstank realisiert ist. Hierdurch wird eine zusätzliche Ventilwirkung ermöglicht. Zudem kann ein Eintritt von Verunreinigungen oder Schmutzpartikeln in die Entlüftungsöffnung 103 verhindert werden.

Die elastische Membran 127 ist auf einem Dorn aufgesetzt, der aus der Mitte der Entlüftungsöffnung 103 nach außen hervorsteht. Dadurch kann ein seitliches Verrutschen der elastischen Membran 127 verhindert werden. In einem Flüssigkeitstank, der mit einer wässrigen Harnstofflösung befüllt wird, kann durch die Membran 127 eine Kristallisation von Harnstoff im gesamten Entlüftungsventil 100 verhindert werden. Die Verhinderung der Kristallbildung ermöglicht eine störungsfreie Funktion des Entlüftungsventils 100.

Oberhalb der Dichtungsplatte 125 wird eine Schutzkappe 129 zum weiteren Verhindern eines Eindringens von Schmutzpartikeln in die Entlüftungsöffnung 103 angeordnet. Die Schutzkappe 129 rastet auf der Dichtungsplatte 125 ein und fixiert dabei gleichzeitig die elastische Membran 127.

Die festen Einzelteile aus denen das Entlüftungsventil 100 hergestellt ist, wie beispielsweise das Gehäuse 115, der Schwimmerkörper 105, der Dichtungsträger 121, die Dichtungsplatte 125 oder die Schutzkappe 129 sind Formteile aus Kunststoff. Diese können beispielsweise im Spritzgussverfahren aus Polyamid (PA), Polyoxymethylen (POM), Polyolefin oder thermoplastischen Elastomeren auf Olefinbasis (TPO) hergestellt werden. Die Fertigung der Einzelkomponenten des Entlüftungsventils 100 aus diesen Materialien ist besonders vorteilhaft, da hierdurch eine hohe Festigkeit und Stabilität des Entlüftungsventils 100 erreicht wird.

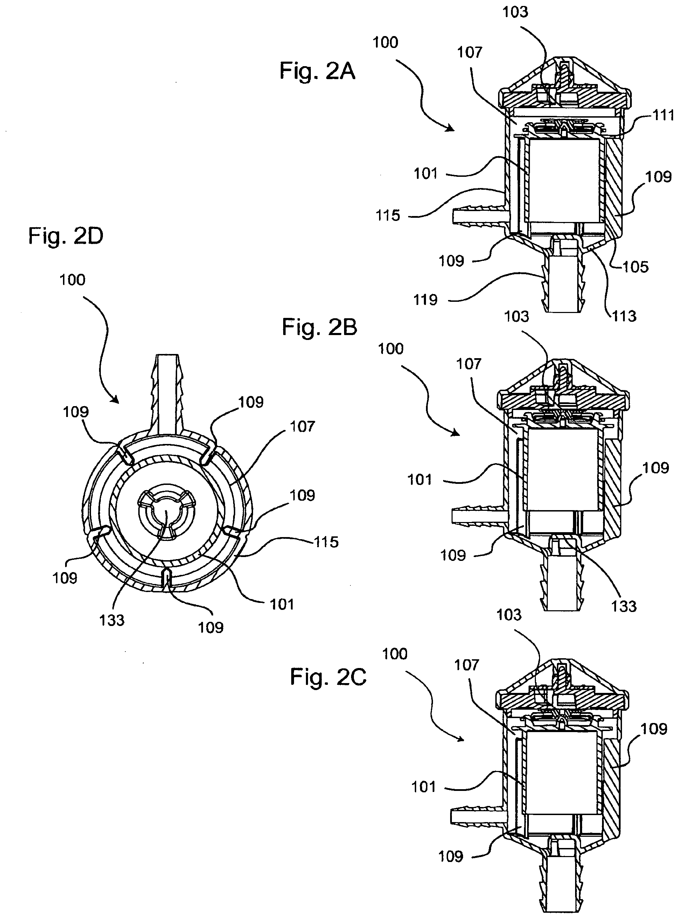

Fig. 2A zeigt eine Querschnittsansicht des Entlüftungsventils 100 mit geöffneter Entlüftungsöffnung 103 in Öffnungsstellung. Der Schwimmer 101 befindet sich in einer unteren Position, so dass die Schwimmerdichtung 123 die Entlüftungsöffnung 103 freigibt und Luft aus der Entlüftungsöffnung 103 entweichen kann. Aufgrund der weiten Öffnung der Entlüftungsöffnung 103 kann die Entlüftung auch mit einer hohen Rate von beispielsweise 40l/min erfolgen. Die aus dem Flüssigkeitstank verdrängte Luft tritt über den Leitungsanschluss 119 in die Schwimmerkammer 107 ein und wird um den Schwimmer 101 herumgeführt, bevor diese dann aus der Entlüftungsöffnung 103 austritt. Somit ist eine Belüftung über die elastische Membran 127 sichergestellt.

Der Schwimmer 101 umfasst einem umlaufenden Randabschnitt 111 zum Abstützen des Schwimmers 101 auf den Führungsrippen 109. In der Öffnungsstellung liegt der Schwimmer 101 auf den Führungsrippen 109 auf. Um ein leichtes Lösen aus der Öffnungsstellung zu ermöglichen, sind auf den Führungsrippen 109 einzelne Erhebungen als Auflagepunkte für den Schwimmerkörper 105 gebildet. Diese Erhebungen verhindern ein großflächiges Aufliegen des Schwimmerkörpers 105 auf dem Führungsrippen 109. Durch die punktuelle Auflage auf den Auflagepunkten wird der Vorteil erreicht, dass einem Festfrieren oder Festkristallisieren des Schwimmerkörpers 105 auf den Führungsrippen 109 entgegengewirkt wird.

Fig. 2B zeigt eine Querschnittsansicht des Entlüftungsventils 100 mit geschlossener Entlüftungsöffnung 103. Nach einem Eintritt von Flüssigkeit über den Leitungsanschluss 109 erhöht sich der Flüssigkeitspegel in der Schwimmerkammer 107 und der Schwimmer 101 wird in die Schließstellung gehoben und schließt mittels der Schwimmerdichtung 123 die Entlüftungsöffnung 103 gegen den Atmosphärendruck. In diesem Fall kann keine Luft und keine Flüssigkeit aus den Entlüftungsventil 100 austreten.

In der Schließstellung verschließt die auf dem Schwimmerkörper 105 angeordnete Schwimmerdichtung 123 die Entlüftungsöffnung 103. Zusätzlich verschließt der Dorn 135 des Schwimmerkörpers 105 die Dichtungsöffnung 141 der Schwimmerdichtung 123. Die Schwimmerkammer 107 ist nach außen hin abgedichtet und ein Austritt von Flüssigkeit wird verhindert. Dies bewirkt anschließend die Abschaltung oder Beendigung des Tankvorganges und der Flüssigkeitstank ist gefüllt.

Fig. 2C zeigt eine Querschnittsansicht des Entlüftungsventils 100 mit geschlossener Schwimmerdichtung 123, in der die Dichtungsöffnung 141 in der Schwimmerdichtung 123 freigegeben ist. Nach einem Absinken des Flüssigkeitspegels in der Schwimmerkammer 107 bewegt sich der Schwimmer 101 nach unten. Dabei gibt der Dorn 135 des Schwimmerkörpers 105 zunächst die zentrale Dichtungsöffnung 141 frei, so dass Luft durch die Dichtungsöffnung 141 in das Innere der Schwimmerkammer 107 oder aus der Schwimmerkammer 107 heraus strömen kann. Dadurch wird ein Druckausgleich erzielt, da ansonsten der Schwimmer 101 in der Schließstellung verharren könnte.

Danach fällt bei einem weiteren Absinken des Flüssigkeitspegels in der Schwimmerkammer 107 dann die Schwimmerdichtung 123 von der Entlüftungsöffnung 103 nach unten hin ab, so dass diese freigegeben wird und Luft über die Entlüftungsöffnung 103 und die elastische Membran 127 nach außen strömen kann, beispielsweise bei einem erneuten Betanken des Flüssigkeitstanks. Es findet wieder ein Druckausgleich zwischen dem Flüssigkeitstank und der Atmosphäre statt.

Fig. 2D zeigt eine weitere Querschnittsansicht des Entlüftungsventils 100 mit mehreren stegartigen Führungsrippen 109. Die Führungsrippen 109 sind durch senkrecht in die Schwimmerkammer 107 ragende Wände gebildet und dienen zum Führen des Schwimmers 101 in der Schwimmerkammer 107. Die Führungsrippen 109 zentrieren den Schwimmer 101 in seitlicher Richtung gegenüber der Innenwand des Gehäuses 115 und ermöglichen eine geführte Bewegung des Schwimmers 101 in Längsrichtung. Durch die Führungsrippen 109 wird eine leichtgängige und verklemmungsfreie Bewegung des Schwimmerkörpers 105 im Inneren der Entlüftungskammer 107 ermöglicht. Zusätzlich bilden die Führungsrippen 109 einen Anschlag für den Schwimmerkörper 105, so dass dieser bei einer Öffnungsbewegung an einer vorgegebenen Position zum Stehen kommt.

Die fünf Führungsrippen 109 sind durch das im Querschnitt kreisförmige Gehäuse 115 der Schwimmerkammer 107 gebildet und ragen senkrecht in das Innere der Schwimmerkammer 107 hinein. Die Führungsrippen 109 erstrecken sich im Inneren der Schwimmerkammer 107 in Längsrichtung und verlaufen entlang einer Strömungsrichtung beim Füllen der Schwimmerkammer 107 durch den Leitungsanschluss 119. Dadurch kann die strukturelle Festigkeit des Gehäuses 115 verbessert werden.

Die Führungsrippen 109 liegen an der Außenseite des becherförmigen Schwimmerkörpers 105 mit einer Führungskante an. Die Führungskante umfasst eine Spitze oder Abrundung zum Verringern der Kontaktfläche mit dem Schwimmer 101. Vorteilhaft ist es, wenn die Führungsrippen 109 leicht keilförmig ausgebildet sind, so dass eine Entformschräge entsteht. Aufgrund der Entformschräge kann das Gehäuse 115 einstückig mit den Führungsrippen 109 effizient mittels eines Spritzgusswerkzeuges hergestellt werden. Über einem Einlass des Leitungsanschluss 119 ist eine Strömungsplatte 133 angeordnet. Im Allgemeinen kann die Anzahl der Führungsrippen 109 variieren. Vorteilhafterweise beträgt die Anzahl der Führungsrippen 109 zwischen drei und fünf.

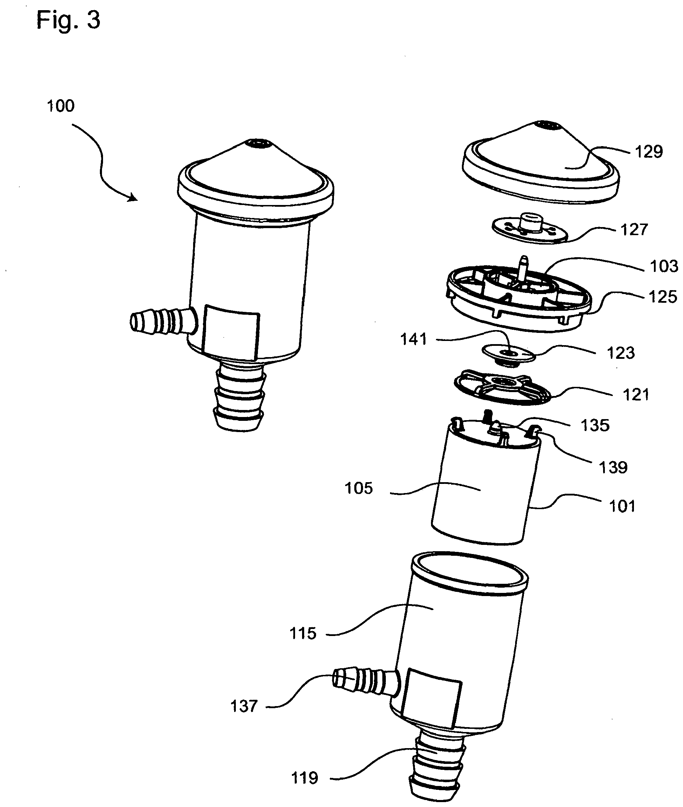

Fig. 3 zeigt eine perspektivische Ansicht und eine Explosionsansicht eines Entlüftungsventils 100. Die Funktionsweise und die Komponenten des Entlüftungsventils 100 entsprechen denjenigen die in Zusammenhang mit Fig. 1 erläutert worden sind, außer dass die Führungsrippen 109 nicht von einer Außenwand des Gehäuses in die Schwimmerkammer hineinragen, sondern sich von dem trichterförmigen Boden des Entlüftungsventils 100 in das Innere der Schwimmerkammer 107 erstrecken. Dadurch kann das Entlüftungsventil 100 noch weiter kompaktifiziert werden.

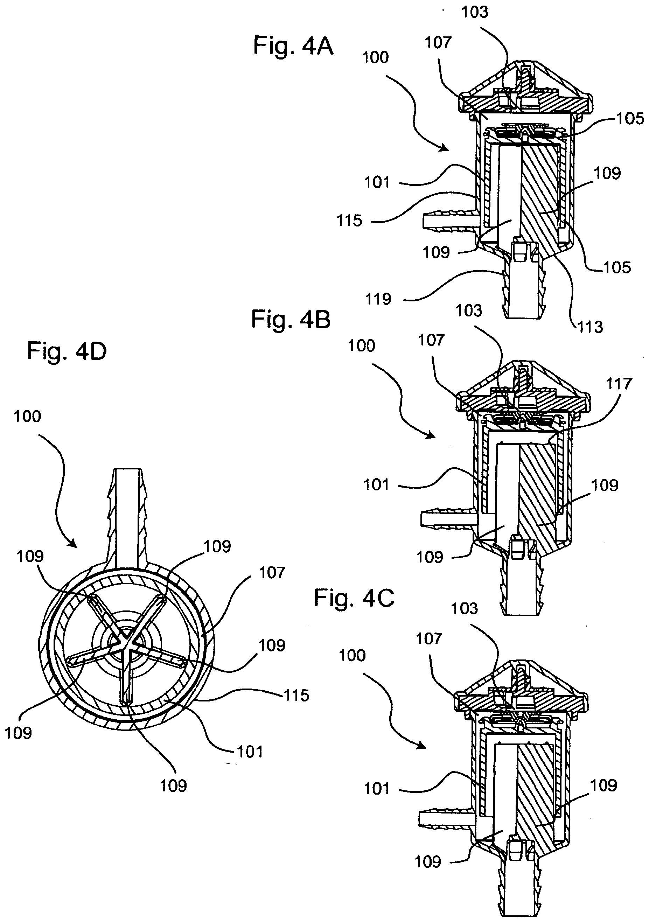

Fig. 4A bis 4C zeigen mehrere Querschnittsansichten des Entlüftungsventils 100 aus Fig. 3 in unterschiedlichen Öffnungszuständen des Schwimmers 101, die denjenigen aus Fig. 2A bis 2D entsprechen. Allerdings erstrecken sich die Führungsrippen 109 von einer Bodenseite 113 der Schwimmerkammer 107 aus und liegen an der Innenseite des becherförmigen Schwimmerkörpers 105 an. An der Oberseite der Führungsrippen 109 ist jeweils eine Noppe oder eine Erhebung 117 zum Verringern einer Auflagefläche des Schwimmers 101 auf den Führungsrippen 109 gebildet. Die Noppen 107 können aus einem elastischen Material gebildet sein, so dass Geräusche beim Auftreffen des Schwimmers 101 auf die Führungsrippen 109 verringert werden. Die Noppen 117 als Schwimmerauflage können mittels einer Zweikomponententechnik im Spritzgussverfahren hergestellt werden, so dass sich eine Kombination aus harten und weichen Materialien ergibt. Zusätzlich kann der Schwimmer 101 ebenfalls aus einem weichen Kunststoff zum Dämpfen von Geräuschen hergestellt werden.

Fig. 4D zeigt eine weitere Querschnittsansicht des Entlüftungsventils 100 mit mehreren stegartigen Führungsrippen 109, die durch Wände gebildet werden. Die Führungsrippen 109 verlaufen ebenfalls entlang einer Strömungsrichtung beim Füllen der Schwimmerkammer 107, zentrieren den Schwimmer 101 in seitlicher Richtung gegenüber der Innenwand des Gehäuses 115 und ermöglichen eine geführte Bewegung des Schwimmers 101 in Längsrichtung.

Die fünf Führungsrippen 109 erstrecken sich sternförmig ausgehend von der Mitte der zylinderförmigen Schwimmerkammer 107 und liegen an der Innenseite des becherförmigen Schwimmerkörpers 105 mit den Führungskanten an. Die Führungskanten weisen ebenfalls eine Spitze oder Abrundung zum Verringern einer Kontaktfläche mit dem Schwimmer 101 auf. Im Allgemeinen kann die Anzahl der Führungsrippen 109 variieren. Vorteilhafterweise beträgt die Anzahl der Führungsrippen 109 zwischen drei und fünf.

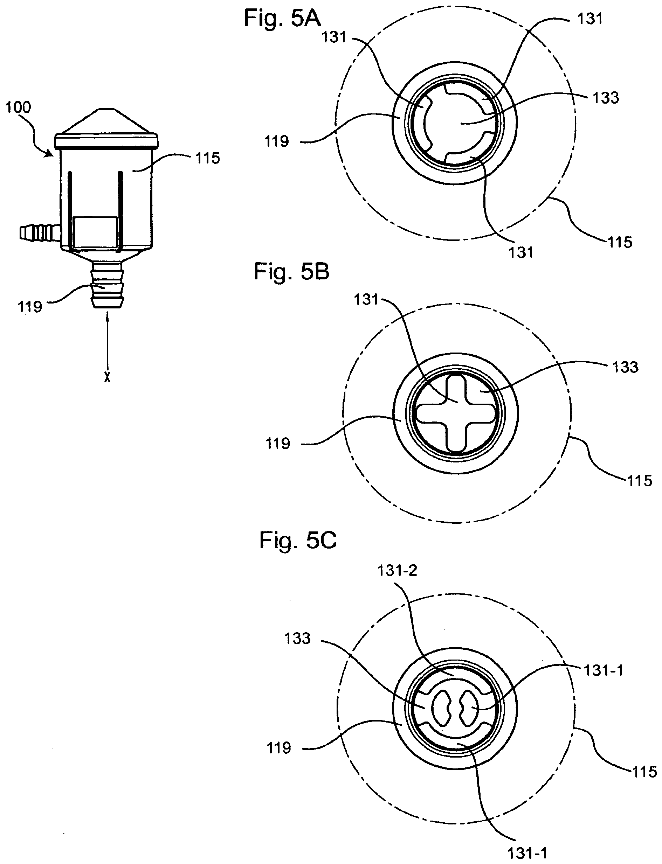

Fig. 5A bis 5C zeigen mehrere Untersichten auf Entlüftungsventile 100 mit unterschiedlichen Strömungsplatten 133. Die Strömungsplatte 133 dient zum Brechen eines in die Schwimmerkammer 107 eintretenden Flüssigkeitsstrahles. Dadurch wird verhindert, dass der eintretende Flüssigkeitsstrahl direkt auf den Schwimmerkörper 105 trifft und diesen durch seinen mechanischen Impuls in die Schließstellung bewegt. Die Strömungsplatte 133 befindet sich unterhalb des Schwimmers 101 und ist ebenfalls durch das Gehäuse 115 der Schwimmerkammer 107 gebildet.

In Fig. 5A weist die Strömungsplatte 133 eine konzentrische Form auf, die mit dem Rand einer Eintrittsöffnung des Leitungsanschluss 119 verbunden ist. Um die Strömungsplatte 133 herum, sind kreisbogenförmige Durchflussöffnungen 131 gebildet, durch die die Flüssigkeit gebremst hindurchtritt. Diese sorgen beim Eindringen der Flüssigkeit für einen ruhigeren Fluss zum Schwimmer 101. Durch diese Anordnung der Durchflussöffnungen 131 wird bewirkt, dass hauptsächlich Flüssigkeit im Bereich der Wand des Leitungsabschnittes 119 in die Schwimmerkammer 107 eintritt. Dies ist vorteilhaft, da die die Flüssigkeit im Bereich der Wand des Leitungsanschlusses 119 eine geringere Strömungsgeschwindigkeit aufweist. In der Mitte der Strömungsplatte 133 befindet sich keine Durchflussöffnung, so dass ein direktes Auftreffen des Flüssigkeitsstrahls auf den Schwimmerkörper 105 verhindert wird.

In Fig. 5B weist die Strömungsplatte 133 eine kreuzförmige Durchflussöffnung 131 auf, durch die die Flüssigkeit ebenfalls gebremst hindurchtritt. Die kreuzförmige Durchflussöffnung 131 bricht den Flüssigkeitsstrahl besonders effektiv.

In Fig. 5C weist die Strömungsplatte 133 zwei mittige, teilsegmentförmige Durchflussöffnungen 131-1 auf und zwei kreisbogenförmige Öffnungen 131-2, die im Bereich der Wand des Leitungsanschlusses 119 verlaufen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Entlüftungsventil
- 101: Schwimmer
- 103: Entlüftungsöffnung
- 105: Schwimmerkörper
- 107: Schwimmerkammer
- 109: Führungsrippen
- 111: Randabschnitt
- 113: Bodenseite
- 115: Gehäuse
- 117: Noppe
- 119: Leitungsanschluss
- 121: Dichtungsträger
- 123: Schwimmerdichtung
- 125: Dichtungsplatte
- 127: Membran
- 129: Schutzkappe
- 131: Durchflussöffnung
- 133: Strömungsplatte
- 135: Dorn
- 137: Nebenstutzen
- 139: Befestigungsarme
- 141: Dichtungsöffnung

## Patentansprüche

1. Entlüftungsventil (100) mit einer Entlüftungsöffnung (103) zum Entlüften eines Flüssigkeitstanks in einem Kraftfahrzeug, mit:
einem Schwimmer (101) in einer Schwimmerkammer (107) zum Verschließen der Entlüftungsöffnung (103); und
Führungsrippen (109) zum Führen des Schwimmers (101) in der Schwimmerkammer (107), die durch ein Gehäuse (115) der Schwimmerkammer (107) gebildet sind und in das Innere der Schwimmerkammer (107) ragen, wobei der Schwimmer (101) einen becherförmigen Schwimmerkörper (105) umfasst, **dadurch gekennzeichnet, dass**
die Führungsrippen (109) an der Innenseite des becherförmigen Schwimmerkörpers (105) anliegen.

2. Entlüftungsventil (100) nach Anspruch 1, wobei der Schwimmer (101) einem umlaufenden Randabschnitt (111) zum Abstützen des Schwimmers (101) auf den Führungsrippen (109) umfasst.

3. Entlüftungsventil (100) nach Anspruch 2, wobei die Führungsrippen (109) jeweils eine Noppe (117) zum Verringern einer Auflagefläche des Schwimmers (101) auf den Führungsrippen (109) umfasst.

4. Entlüftungsventil (100) nach Anspruch 3, wobei der Noppen (117) aus einem elastischen Material gebildet ist.

5. Entlüftungsventil (100) nach einem der vorangehenden Ansprüche, wobei die Führungsrippen (109) durch senkrecht in die Schwimmerkammer (107) ragende Wände gebildet sind.

6. Entlüftungsventil (100) nach Anspruch 5, wobei die Führungsrippen (109) keilförmig mit einer Entformschräge ausgebildet sind.

7. Entlüftungsventil (100) nach einem der vorangehenden Ansprüche, wobei sich die Führungsrippen (109) von einer Bodenseite (113) der Schwimmerkammer (107) aus erstrecken.

8. Entlüftungsventil (100) nach einem der vorangehenden Ansprüche, wobei die Führungsrippen (109) an eine Führungskante eine Spitze oder Abrundung zum Verringern einer Kontaktfläche aufweisen.

9. Entlüftungsventil (100) nach einem der vorangehenden Ansprüche, wobei die Führungsrippen (109) entlang einer Strömungsrichtung beim Füllen der Schwimmerkammer (107) verlaufen.

10. Entlüftungsventil (100) nach einem der vorangehenden Ansprüche, wobei zwischen den Führungsrippen (109) eine Strömungsplatte mit einer Durchflussöffnung zum Brechen eines in die Schwimmerkammer (107) eintretenden Flüssigkeitsstrahles angeordnet ist.

11. Entlüftungsventil (100) nach einem der vorangehenden Ansprüche, wobei in den Führungsrippen (109) eine Aufsetzkante zum Aufsetzen des Schwimmers (101) gebildet ist.

12. Entlüftungsventil (100) nach einem der vorangehenden Ansprüche, wobei die Führungsrippen (109) einstückig mit dem Gehäuse (115) ausgebildet sind.

## Claims

1. Vent valve (100) with a vent opening (103) for venting a liquid tank in a motor vehicle, with:
a float (101) in a float chamber (107) for closing the vent opening (103); and
guide ribs (109) for guiding the float (101) in the float chamber (107), which guide ribs are formed by a housing (115) of the float chamber (107) and protrude into the interior of the float chamber (107), wherein the float (101) comprises a cup-shaped float body (105), **characterized in that**
the guide ribs (109) bear against the inside of the cup-shaped float body (105).

2. Vent valve (100) according to claim 1, wherein the float (101) comprises an encircling border section (111) for supporting the float (101) on the guide ribs (109).

3. Vent valve (100) according to Claim 2, wherein the guide ribs (109) each comprise a knob (117) for reducing a supporting surface of the float (101) on the guide ribs (109).

4. Vent valve (100) according to Claim 3, wherein the knob (117) is formed from an elastic material.

5. Vent valve (100) according to one of the preceding claims, wherein the guide ribs (109) are formed by walls protruding vertically into the float chamber (107).

6. Vent valve (100) according to Claim 5, wherein the guide ribs (109) are of wedgeshape design with a demoulding slope.

7. Vent valve (100) according to one of the preceding claims, wherein the guide ribs (109) extend from a bottom side (113) of the float chamber (107).

8. Vent valve (100) according to one of the preceding claims, wherein the guide ribs (109) have a point or rounded portion on a guide edge for reducing a contact surface.

9. Vent valve (100) according to one of the preceding claims, wherein the guide ribs (109) run along a direction of flow during the filling of the float chamber (107).

10. Vent valve (100) according to one of the preceding claims, wherein a flow plate with a throughflow opening for breaking up a liquid jet entering the float chamber (107) is arranged between the guide ribs (109).

11. Vent valve (100) according to one of the preceding claims, wherein a mounting edge for the mounting of the float (101) is formed in the guide ribs (109).

12. Vent valve (100) according to one of the preceding claims, wherein the guide ribs (109) are formed integrally with the housing (115).

## Revendications

1. Soupape de ventilation (100) ayant une ouverture de ventilation (103) pour désaérer un réservoir de liquide dans un véhicule automobile, comportant:
un flotteur (101) dans une chambre à flotteur (107) pour fermer l'ouverture de ventilation (103); et
des nervures de guidage (109) pour conduire le flotteur (101) dans la chambre à flotteur (107), qui sont formées à partir d'un boîtier (115) de la chambre à flotteur (107) et qui s'étendent à l'intérieur de la chambre à flotteur (107), le flotteur (101) comporte un corps flottant (105) en forme de coupe, **caractérisée en ce que**
les nervures de guidage (109) s'appuyant contre la partie interne du corps flottant en forme de coupe (105).

2. Soupape de ventilation (100) selon la revendication 1, le flotteur (101) comportant une partie de bord (111) périphérique pour supporter le flotteur (101) sur les nervures de guidage (109).

3. Soupape de ventilation (100) selon la revendication 2, les nervures de guidage (109) comportant respectivement un bouton (117) pour réduire une surface de support du flotteur (101) sur les nervures de guidage (109).

4. Soupape de ventilation (100) selon la revendication 3, le bouton (117) étant formé à partir d'un matériau élastique.

5. Soupape de ventilation (100) selon l'une des revendications précédentes, les nervures de guidage (109) étant formées à partir de parois, qui s'étendent perpendiculairement à la chambre à flotteur (107).

6. Soupape de ventilation (100) selon la revendication 5, les nervures de guidage (109) étant réalisées en forme de coin avec une pente de démoulage.

7. Soupape de ventilation (100) selon l'une des revendications précédentes, les nervures de guidage (109) s'étendant depuis un côté inférieur (113) de la chambre à flotteur (107).

8. Soupape de ventilation (100) selon l'une des revendications précédentes, les nervures de guidage (109) comportant une pointe ou un arrondissement sur un bord de guidage pour réduire une surface de contact.

9. Soupape de ventilation (100) selon l'une des revendications précédentes, les nervures de guidage (109) s'étendant le long d'une direction d'écoulement pendant le remplissage de la chambre à flotteur (107).

10. Soupape de ventilation (100) selon l'une des revendications précédentes, une plaque d'écoulement ayant une ouverture de passage pour briser un jet de liquide qui entre dans la chambre à flotteur (107) étant placée entre les nervures de guidage (109).

11. Soupape de ventilation (100) selon l'une des revendications précédentes, une extrémité de montage étant réalisée dans les nervures de guidage (109) pour monter le flotteur (101).

12. Soupape de ventilation (100) selon l'une des revendications précédentes, les nervures de guidage (109) étant réalisées d'une seule pièce avec le boîtier (115).
